Europäisches Patentamt

**European Patent Office**

Office européen des brevets

(19)

(11) Numéro de publication: **0 236 171**
A1

(12) **DEMANDE DE BREVET EUROPEEN** .

(21) Numéro de dépôt: **87400169.6**

(51) Int. Cl.⁴: **B 29 C 55/08,** B 29 C 55/20

(22) Date de dépôt: **26.01.87**

(30) Priorité: **29.01.86 FR 8601227**

(43) Date de publication de la demande: **09.09.87**
**Bulletin 87/37**

(84) Etats contractants désignés: **AT BE CH DE ES FR GB IT LI LU NL SE**

(71) Demandeur: **SOCIETE FRANCAISE D'EXTRUSION ET DE CALANDRAGE (SFEC), Zone Industrielle, F-02400 Chateau-Thierry (FR)**

(72) Inventeur: **Toussaint, Jacques, 89 Ter Boulevard Michelet, F-93130 Noisy Le Sec (FR)**

(74) Mandataire: **Lepeudry-Gautherat, Thérèse et al, ARMENGAUD JEUNE CABINET LEPEUDRY 6, rue du Fg. St-Honoré, F-75008 Paris (FR)**

(54) Mécanisme d'étirage transversal et en continu d'un film plastique.

(57) Mécanisme d'étirage transversal d'un film plastique. On entoure chaque série de galets (4, 6) entre lesquels est pincé le film plastique à étirer d'une courroie monobloc (10, 11) formée d'une partie plane reliant au moins deux parties profilées (13) en forme de bourrelets qui se placent dans des gorges (9) de profil correspondant prévues sur les galets. Les bourrelets de la courroie (11) portée par les galets (6) sont décalés par rapport aux bourrelets de la courroie (10) portée par les autres galets (4).

L'invention se rapporte à un mécanisme d'étirage transversal et en continu d'un film plastique et concerne plus précisément les organes d'étirage constitués de roues d'entraînement entre lesquelles est pincée la bordure du film à étirer.

On sait que les films plastiques du genre des films polyvinyles, polyéthylènes, polypropylènes fournis par une machine de production sous forme de bandes continues ayant une largeur et une épaisseur déterminées, peuvent être étirés dans le sens de la longueur et dans le sens de la largeur pour fournir un film plus mince mais de largeur plus importante et appropriée à l'utilisation recherchée.

Les techniques d'étirage couramment utilisées consistent à saisir les deux bordures du film plastique fournie par la machine par deux organes d'étirage placés de part et d'autre, orientés de façon divergente par rapport au sens de déroulement du film, qui pincent ce dernier et exercent sur lui une traction longitudinale en même temps qu'une traction transversale. Chaque organe d'étirage ainsi disposé sur un côté du film plasique est constitué de deux séries de galets tournants, l'une des séries étant au dessus du film et l'autre en dessous, une de ces séries au moins entraînant une bande sans fin, en contact avec le film plastique contre lequel elle est appliquée par les galets de l'autre série. On fait en sorte bien entendu que soient correctement positionnés les uns vis à vis des autres les galets de chacune des séries pour que la pression mutuelle exercée soit suffisante pour maintenir pincées les bordures du film.

On utilise avantageusement des bandes sans fin sur chacune des séries de galets de sorte que le film plastique soit saisi sur toute la longueur des organes d'étirage et non par des points successifs, ceci pour égaliser parfaitement l'étirage.

Mais la résistance transversale à l'étirage du film plastique impose que ces bandes, bien que tendues correctement sur les galets par tous systèmes appropriés, soient guidées sur ceux-ci pour éviter qu'elles ne ripent latéralement. C'est pourquoi ces bandes sont avantageusement formées de courroies de section circulaire ou elliptique logées dans des gorges de guidage prévues sur les galets, ou encore ces bandes ont une section sensiblement rectangulaire dont les faces extérieures sont profilées comme décrit dans le DE-A 2 245 306. Le film plastique est ainsi pincé entre une courroie portée par une série de galets d'entraînement et les galets de l'autre série, ou encore entre les deux courroies de chacune des séries, appliquées l'une contre l'autre.

Malgré les précautions prises, les contraintes sont telles que bien souvent les courroies sortent des gorges de guidage et échappent à leur galet support, ou encore se rompent sous l'effet de la pression, ce qui impose dans tous les cas l'arrêt de la machine et l'intervention de l'utilisateur.

Un objet de la présente invention consiste en un mécanisme d'étirage qui assure sa fonction de façon simple et efficace et permet d'éviter les inconvénients précités.

Le mécanisme selon l'invention consiste à entourer chacune des séries de galets entre lesquels est pincé le film plastique, d'une courroie monobloc formée d'une partie plane ou sensiblement plane reliant au moins deux parties profilées en forme de bourrelets symétriques par rapport à la partie plane, lesquels bourrelets se plaçant dans des gorges de profil correspondant prévues sur lesdits galets.

Selon une caractéristique particulière de l'invention, la série inférieure de galets est montée sur une traverse qui s'articule sur au moins deux bielles tourillonnant sur deux des axes fixés au support, et les deux séries de galets inférieurs et supérieurs sont disposés en quinconce pour que chaque galet soit en appui contre les flancs de deux galets opposés.

D'autres caractéristiques particulières et avantages de l'invention ressortiront de la description qui va suivre d'un exemple de réalisation dans lequel on se réfère aux figures qui représentent :

- figure 1, une vue schématique en plan du mécanisme d'étirage,

- figure 2, une vue en coupe agrandie selon la coupe AA' de la figure 1,

- figure 3, une vue en élévation latérale schématique d'organes d'étirage,

- figure 4 et 5, deux vues schématiques en coupe de divers profils de courroie utilisée.

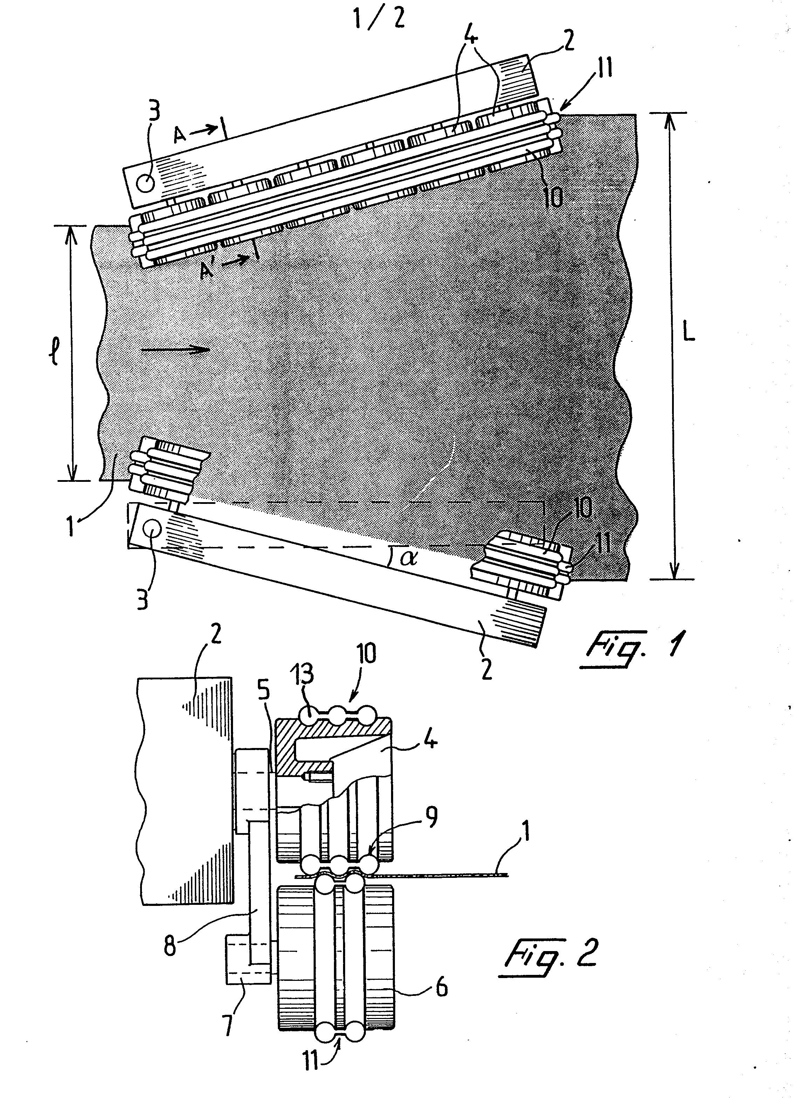

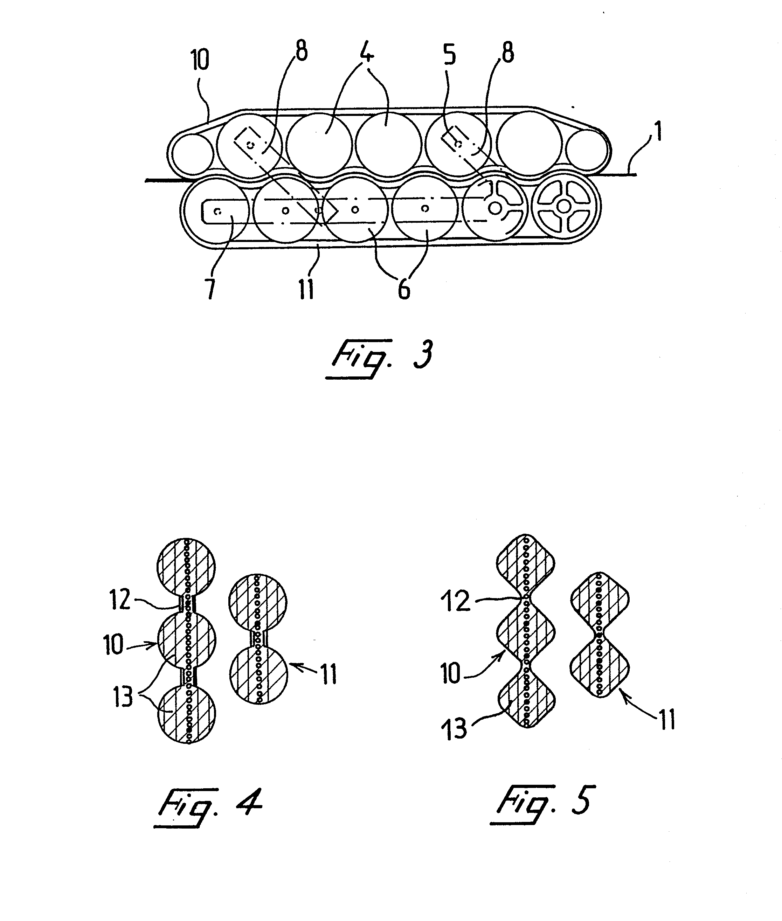

La figure 1 montre schématiquement un mécanisme à deux organes d'étirage placés de chaque côté d'un film plastique 1 venant d'une machine de production non représentée et défilant dans le sens de la flèche. Chacun de ces organes comprend essentiellement un support longitudinal 2 pouvant pivoter autour d'un axe vertical 3 et prendre une inclinaison $\alpha$ par rapport à l'axe de défilement du film. La partie inférieure de la figure 1 montre en pointillé la position occupée par le support 2 pour un angle $\alpha$ = 0°. Des moyens non représentés, par exemple du genre à crémaillère, permettent d'incliner les organes d'étirage pour qu'il fournissent en sortie un film de largeur L à partir d'un film de largeur l alimenté à l'entrée . En se référant également aux figures 2 et 3 on voit qu'une première série de galets 4 à axes horizontaux 5 disposés les uns à côté des autres sont montés sur le support 2. Une seconde série de galets 6 disposés au dessous de la série 4, sont montés sur une traverse 7 qui s'articule sur au moins deux bielles 8 tourillonnant sur deux des axes 5 fixés au support 2. Chaque galet est muni de gorges 9 servant de logement et appropriées à recevoir une courroie désignée dans son ensemble par les références 10 ou 11. Les courroies 10 et 11 forment une

4    0236171

bande sans fin qui entoure    chaque série de galets comme
on le voit schématiquement à la figure 3. Dans la position
de cette figure les bielles 8, sous l'action de vérins
non représentés, maintiennent appliquées l'une contre l'autre
les deux séries de galets 4 et 6, et du fait de leur positionnement en quinconce chacun de ceux-ci est en appui contre les flancs de
deux galets opposés. Les courroies 10 épousent ainsi le profil d'interpénétration des galets et peuvent pincer entre elles de façon
efficace le film plastique 1. On notera que les galets 4 et 6
ont un diamètre identique sauf en ce qui concerne les deux
galets d'extrémité de la série supérieure.

la courroie 10 enveloppant la première série de
galets 4 forme un ensemble monobloc de géométrie particulière
constitué d'une partie plane  et mince 12 et de trois bourrelets longitudinaux profilés 13 qui se positionnent dans les
gorges 9 des galets, tandis que les parties planes 12 sont
en appui sur les parties planes du galet séparant lesdites gorges.

La courroie 11 enveloppant la seconde série de
galets 6 forme également un ensemble monobloc de géométrie
particulière constitué d'une partie plane 12 reliant cette
fois deux bourrelets longitudinaux qui se positionnent dans
les gorges 9 des galets 6.

Etant décalés transversalement au  sens de déplacement du film plastique, les bourrelets de chaque courroie
sont placésen face de la partie plane de la courroie opposée
Les deux courroies 10 et 11 sont donc imbriquées l'une dans
l'autre comme on le voit particulièrement à la figure 2.

Il a été représenté une courroie 10 à trois bourrelets et une courroie 11 à deux bourrelets, ce qui est une
disposition minimun, mais chaque courroie pourrait être munie
d'un nombre plus important de bourrelets en fonction des
largeurs d'étirage recherchées et des forces de pincement
qui leur sont nécessaires.

Les figures 2 et 4 montrent une courroie dont le
profil des bourrelets longitudinaux est rond tandis que dans la variante illustrée à la figure 5 le profil est trapézoïdal.

Grâce à la configuration de ces courroies la surface de pincement du film plastique est considérablement accrue et le film plastique est pincé entre les deux courroies pendant la totalité du parcours de la longueur de la série des galets ; donc la pression spécifique sur les courroies peut être réduite et leur durée de vie considéralement prolongée. De plus, et du fait de la bonne imbrication réciproque de la bande 10 et de la bande 11, ces dernières sont donc autoguidées, elles restent stables et ne peuvent échapper latéralement aux galets porteurs ce qui rend le système particulièrement fiable.

6

REVENDICATIONS

1.- Mécanisme d'étirage transversal et en continu d'un film plastique comportant au moins une paire d'organes d'étirage placés de part et d'autre du film plastique et formant un angle avec la direction d'avancement de ce film, dans lequel chaque organe comporte deux séries de galets d'entraînement se trouvant face à face et portant chacun une courroie sans fin monobloc dont la face extérieure profilée présente des parties en relief décalées par rapport aux parties en relief de la courroie opposée, caractérisé en ce que chaque courroie (10, 11) est formée d'au moins une partie plane (12) en appui sur une partie plane correspondante du galet (4) reliant deux parties profilées en forme de bourrelets (13) symétriques par rapport à ladite partie plane, et en ce que les bourrelets de chaque courroie sont placés en face de la partie plane de la courroie opposée.

2.- Mécanisme d'étirage selon la revendication 1 dont les galets sont munis de gorges pour recevoir les bourrelets des courroies, caractérisé en ce que les bourrelets (13) et les gorges (9) du galet ont un profil rond et les gorges sont séparées les unes des autres par une partie plane dudit galet.

3.- Mécanisme d'étirage selon la revendication 1 dont les galets sont munis de gorges pour recevoir les bourrelets des courroies, caractérisé en ce que les bourrelets (13) ont un profil trapézoïdal sur les deux faces de la courroie et en ce que les gorges (9) du galet ont un profil trapézoïdal et sont séparées les unes des autres par une partie plane dudit galet.

4.- Mécanisme d'étirage selon la revendication 1, caractérisé en ce que la série inférieure de galets (6) est montée sur une traverse (7) qui s'articule sur au moins deux bielles (8) tourillonnant sur deux des axes (5) fixés au support.

7

0236171

5.- Mécanisme d'étirage selon les revendications 1 et 4, caractérisé en ce que la série supérieure de galets (4) et la série inférieure de galets (6) sont disposés en quinconce pour que chaque galet soit en appui contre les flancs de deux galets opposés.

6.- Mécanisme d'étirage selon la revendication 1, caractérisé en ce que les galets (4, 6) sont de diamètre identique.

0236171

1/2

*Fig. 1*

*Fig. 2*

_Fig. 3_

_Fig. 4_

_Fig. 5_

Office européen
des brevets

**RAPPORT DE RECHERCHE EUROPEENNE**

## DOCUMENTS CONSIDERES COMME PERTINENTS

| Catégorie | Citation du document avec indication, en cas de besoin, des parties pertinentes | Revendication concernée | CLASSEMENT DE LA DEMANDE (Int. Cl.4) |
|---|---|---|---|
| D,X | DE-A-2 245 306  (LINDAUER DORNIER GmbH) <br> * Revendications  1,2,4; figures 1-3 * | 1-3 | B 29 C   55/08 <br> B 29 C   55/20 |
| A | DE-A-2 725 356  (HUTTER & SCHRANTZ AG) <br> * Revendications 1,2; figures 1,2 * | 1-3 | |
| A | US-A-3 148 410  (SOMERVILLE LAURIE K.) <br> * Figure 5 * | 1,5,6 | |
| A | FR-A-1 493 411  (GOURNELLE M.P.) <br> * Page 3,  colonne  de  gauche, lignes 25-44; figures 14,16,19 * | 1 | |
| A | EP-A-0 087 399  (ALPHATHERM INDUSTRIALE SpA) <br> * Revendications  2,4,5; figures 3-5 * | 1-3 | **DOMAINES TECHNIQUES RECHERCHES (Int. Cl.4)** <br><br> B 29 C <br> B 65 H <br> D 06 C |
| A | DE-B-1 184 934  (BADISCHE ANILIN & SODA-FABRIK AG) <br> * Figures 1-4 * | 1,2 | |
| A | US-A-4 253 836  (MIRANTI J.P. Jr.) <br> * Figures 19,20 * | 1-3 | |
| | ---           -/- | | |

Le présent rapport de recherche a été établi pour toutes les revendications

| Lieu de la recherche | Date d'achèvement de la recherche | Examinateur |
|---|---|---|
| LA HAYE | 28-04-1987 | BELIBEL C. |

CATEGORIE DES DOCUMENTS CITES

X : particulièrement pertinent à lui seul
Y : particulièrement pertinent en combinaison avec un autre document de la même catégorie
A : arrière-plan technologique
O : divulgation non-écrite
P : document intercalaire

T : théorie ou principe à la base de l'invention
E : document de brevet antérieur, mais publié à la date de dépôt ou après cette date
D : cité dans la demande
L : cité pour d'autres raisons

& : membre de la même famille, document correspondant

OEB Form 1503 03 82

**Office européen des brevets**

**RAPPORT DE RECHERCHE EUROPEENNE**

| | DOCUMENTS CONSIDERES COMME PERTINENTS | | Page 2 |
|---|---|---|---|
| Catégorie | Citation du document avec indication, en cas de besoin, des parties pertinentes | Revendication concernée | CLASSEMENT DE LA DEMANDE (Int. Cl.4) |
| A | US-A-3 471 606 (CORBETT H.O. et al.) <br> * Colonne 4, ligne 63 - colonne 5, ligne 13; figures 2,3 * | 1,4 | |
| | --- | | |
| A | DE-A-2 456 830 (REST H.) <br> * Figure 1 * | 1,4 | |
| | ----- | | |
| | | | DOMAINES TECHNIQUES RECHERCHES (Int. Cl.4) |

Le présent rapport de recherche a été établi pour toutes les revendications

| Lieu de la recherche | Date d'achèvement de la recherche | Examinateur |
|---|---|---|
| LA HAYE | 28-04-1987 | BELIBEL C. |